# EUROPEAN PATENT APPLICATION

(11) **EP 4 738 303 A2**
(43) Date of publication of application: **06.05.2026**
(21) Application number: 25203680.1
(22) Date of filing: 22.09.2025
(51) Int. Cl.: G08B 29/14, G08B 29/04

(54) **EVENT DETECTION DEVICE TESTING**

(30) Priority: 15.10.2024 US 202418916121
(71) Applicant: Honeywell International Inc., Charlotte, NC 28202 (US)
(72) Inventor: WOLF, Benjamin H., Charlotte, 28202 (US); BARSON, Michael, Charlotte, 28202 (US); CHITTURI, Prudhvi Ranga, Charlotte, 28202 (US)
(74) Representative: Haseltine Lake Kempner LLP

(57) **Abstract**

Devices, methods, and systems for event detection device (100, 200, 300, 400) testing are described herein. One device includes a memory (124, 724) and a processor (126, 726) to execute instructions stored in the memory to enable a filter-mode while the event detection device is simultaneously operating in a normal operational mode, cause a self-test module (106, 406) of the event detection device to generate an amount of test medium for a testing chamber (104, 204, 404) of the event detection device, cause an air movement device (116, 216, 416) of the event detection device to pass the test medium through the testing chamber, and cause the event detection device to perform an anti-mask test using the test medium to determine whether the testing chamber is blocked while in the filter-mode.

## Description

### Technical Field

The present disclosure relates generally to devices, methods, and systems for event detection device testing.

### Background

Large facilities (e.g., buildings), such as commercial facilities, office buildings, hospitals, and the like, may have an alarm system that can be triggered during an emergency situation (e.g., a fire) to warn occupants to evacuate. For example, an alarm system may include a control panel and a plurality of event detection devices located throughout the facility (e.g., on different floors and/or in different rooms of the facility) that can sense an event occurring in the facility and provide a notification of the event to the occupants of the facility via alarms.

Maintaining the alarm system can include regular cleaning and testing of event detection devices. Such cleaning and/or testing of event detection devices may be mandated by codes of practice in an attempt to ensure that the event detection devices are functioning properly.

### Brief Description of the Drawings

Figure 1 illustrates a block diagram of an event detection device in accordance with one or more embodiments of the present disclosure.
Figure 2 illustrates a portion of an example of an event detection device in accordance with one or more embodiments of the present disclosure.
Figure 3 illustrates a block diagram of an alarm system in accordance with one or more embodiments of the present disclosure.
Figure 4 illustrates a system for event detection device testing in accordance with one or more embodiments of the present disclosure.
Figure 5 illustrates a timing diagram for event detection device testing in accordance with one or more embodiments of the present disclosure.
Figure 6 illustrates a method for a software filter for event detection device testing in accordance with one or more embodiments of the present disclosure.
Figure 7 is an example of a controller for event detection device testing, in accordance with one or more embodiments of the present disclosure.

### Detailed Description

Devices, methods, and systems for event detection device testing are described herein. One device includes a memory and a processor to execute instructions stored in the memory to enable a filter-mode while the event detection device is simultaneously operating in a normal operational mode, cause a self-test module of the event detection device to generate an amount of test medium for a testing chamber of the event detection device, cause an air movement device of the event detection device to pass the test medium through the testing chamber, and cause the event detection device to perform an anti-mask test using the test medium to determine whether the testing chamber is blocked while in the filter-mode.

As mentioned above, maintaining the alarm system can include regular cleaning and testing of event detection devices. However, since tests may only be completed periodically, there is a risk that faulty event detection devices may not be discovered quickly or that tests will not be carried out on all the event detection devices in an alarm system.

Testing each event detection device can be time consuming, expensive, and disruptive to a business. For example, a maintenance engineer is often required to access event detection devices which are situated in areas occupied by building users or parts of buildings that are often difficult to access (e.g., elevator shafts, high ceilings, ceiling voids, etc.). As such, the maintenance engineer may take several days and several visits to complete testing of the event detection devices, particularly at a large site. Additionally, it is often the case that some event detection devices never get tested because of access issues.

In order to ensure event detection devices are tested, the event detection devices can utilize a self-test procedure. The self-test procedure can be an automatic testing procedure performed by an event detection device without a user, such as a maintenance engineer or other type of user. The self-test procedure can therefore allow event detection devices to be tested, even if such event detection devices are remotely located and/or difficult to access.

The self-test procedure can include generating a test medium and providing the test medium to a test chamber for sensing. The test medium can be provided from a self-test module included in the event detection device. However, if the testing chamber is blocked, the event detection device may not be able to monitor for events in the facility while the event detection device is in a normal operational mode as smoke, for example, may not be able to enter the testing chamber.

As such, it can be important to ensure that the testing chamber is not blocked. One way to determine whether the testing chamber is blocked is to perform an anti-mask test. An anti-mask test can be a procedure that, when performed, can determine whether the testing chamber of the event detection device is blocked, whether the event detection device is covered up (e.g., which would block the testing chamber), etc.

Such an anti-mask test can be performed periodically. However, periodic anti-mask tests can take the event detection device out of a normal operational mode in order to perform the anti-mask test so they are not actively detecting events in the facility, reducing the effectiveness of the event detection system.

Additionally, performing anti-mask tests that generate an amount of test medium to exceed an alarm threshold for the event detection device while the event detection device is in a maintenance mode can quickly deplete the amount of test medium available in a self-test module of the event device. This can limit the number of anti-mask tests that can be performed.

Event detection device testing, according to the disclosure, can allow for an event detection device to perform anti-mask tests while the event detection device is simultaneously in a normal operational mode. The anti-mask tests can be performed with a smaller amount of test medium, as compared with previous approaches. Anti-mask tests can be initiated if no events in the facility are taking place and can be performed while the event detection device is in the normal operational mode to ensure that the testing chamber is not blocked while also being able to simultaneously listen for real events. Accordingly, event detection device testing according to the disclosure can provide for a more efficient and safe solution for anti-mask testing and event detection device operation, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

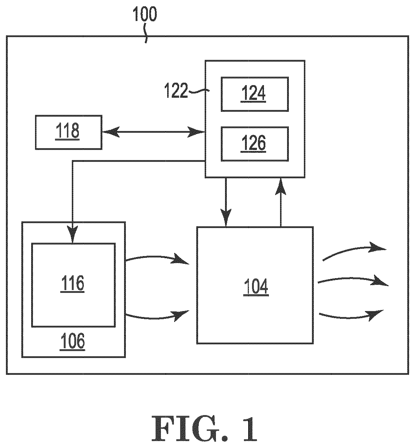

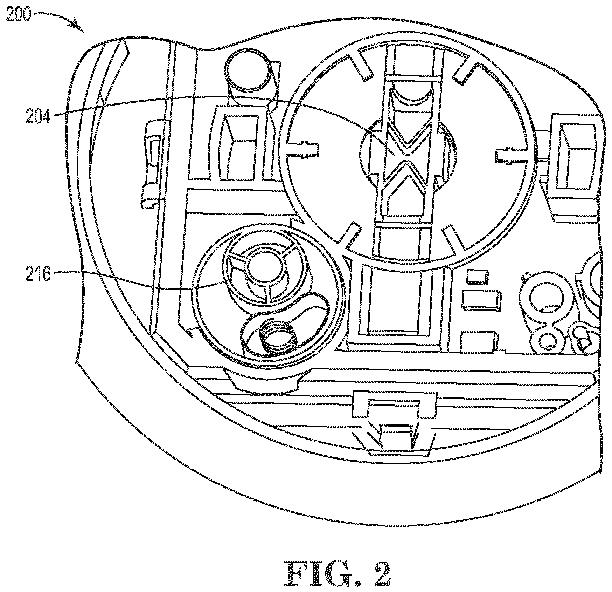

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates a block diagram of an event detection device 100 in accordance with one or more embodiments of the present disclosure. The event detection device 100 can include a controller (e.g., microcontroller) 122, a sounder 118, a testing chamber 104, a self-test module 106, and an air movement device 116.

The controller 122 can include a memory 124 and a processor 126. Memory 124 can be any type of storage medium that can be accessed by processor 126 to perform various examples of the present disclosure. For example, memory 124 can be a non-transitory computer readable medium having computer readable instructions (e.g., computer program instructions) stored thereon that are executable by processor 126 for event detection device testing in accordance with the present disclosure. For instance, processor 126 can execute the executable instructions stored in memory 124 to enable a filter-mode of the event detection device 100, cause a self-test module to generate an amount of test medium, cause an air movement device to pass the test medium through a testing chamber, and perform an anti-mask test using the test medium to determine whether the testing chamber is blocked.

Figure 2 illustrates a portion of an example of an event detection device 200 in accordance with one or more embodiments of the present disclosure. The event detection device 200 can correspond to the event detection device 100 of Figure 1 and can be, but is not limited to, a fire and/or smoke detector of a fire control system.

An event detection device 200 can sense an event, such as a fire, occurring in a facility and trigger a response to provide a notification of the event to occupants of the facility. An event response can include visual and/or audio alarms, for example. An event response can also notify emergency services (e.g., fire departments, police departments, etc.). In some examples, a plurality of event detection devices can be located throughout a facility (e.g., on different floors and/or in different rooms of the facility).

As shown in Figure 2, the event detection device 200 can include a testing chamber 204 and an air movement device 216. The testing chamber 204 can be, for instance, an optical scatter chamber and the air movement device 216 can correspond to the air movement device 116 of Figure 1.

The air movement device 216 can control the airflow through the event detection device 200, including the testing chamber 204. For example, the air movement device 216 can move particles, gases, and/or aerosol from a first end of the event detection device 200 to a second end of the event detection device 200. The air movement device 216 can start responsive to a command and can stop responsive to a command and/or after a particular period of time.

An event detection device 200 can automatically or upon command perform a self-test procedure. The self-test procedure can include causing a test medium to be generated, initiating a release of the test medium into the testing chamber 204, and causing a sensor to take a reading of the test medium.

The reading can include measuring a value associated with the test medium in the testing chamber 204. The controller can further compare the value associated with the test medium to a threshold value.

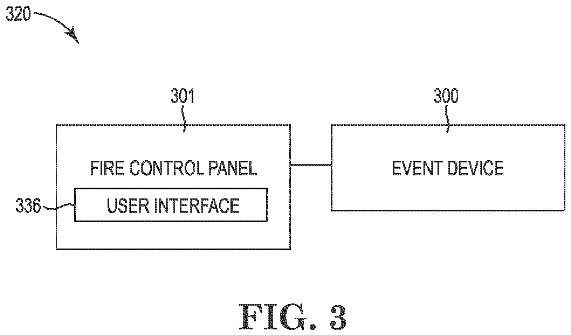

Figure 3 illustrates a block diagram of an alarm system 320 in accordance with one or more embodiments of the present disclosure. The alarm system 320 can include an event detection device 300 and a fire control panel 301. The event detection device 300 can be, for example, event detection device 100 and/or 200 previously described in connection with Figures 1 and 2, respectively.

The fire control panel 301 can be a monitoring device, a fire detection control system, and/or a cloud computing device of the alarm system 320. The fire control panel 301 can be configured to send commands to and/or receive reports from an event detection device 300 via a wired or wireless network. For example, the event detection device 300 can report a sensor reading during an anti-mask test of the event detection device 300. Additionally, in some examples the event detection device 300 can report a confirmed event to the fire control panel 301 responsive to a measured value after a particular period of time being greater than a threshold value.

The fire control panel 301 can receive reports from a number of event detection devices analogous to event detection device 300. For example, the fire control panel 301 can receive reports from each of a number of event detection devices analogous to event detection device 300 and transmit commands based on the reports from each of the number of event detection devices.

In a number of embodiments, the fire control panel 301 can include a user interface 336. The user interface 336 can be a GUI that can provide and/or receive information to and/or from a user and/or the event detection device 300. The user interface 336 can display messages and/or data received from the event detection device 300. For example, the user interface 336 can alert a user to an unconfirmed event, a confirmed event, and/or a false alarm reported by the event detection device 300.

The networks described herein can be a network relationship through which event detection device 300 and/or fire control panel 301 can communicate with each other. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from and transmit information to event detection device 300 and/or fire control panel 301 via a wired or wireless network.

As used herein, a "network" can provide a communication system that directly or indirectly links two or more computers and/or peripheral devices and allows a fire control panel to access data and/or resources on an event detection device 300 and vice versa. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get data. Applications may also communicate with network management software, which can interact with network hardware to transmit information between devices on the network.

In some examples, the network can be used by the event detection device 300 and/or the fire control panel 301 to communicate with a remote computing device. The remote computing device can be a personal laptop computer, a desktop computer, a mobile device such as a smart phone, a tablet, a wrist-worn device, and/or redundant combinations thereof, among other types of computing devices. The remote computing device can receive reports from a number of event detection devices analogous to event detection device 300 and/or a number of fire control panels analogous to fire control panel 301 and transmit commands based on the reports to one or more of the number of event detection devices and/or one or more of the number of fire control panels.

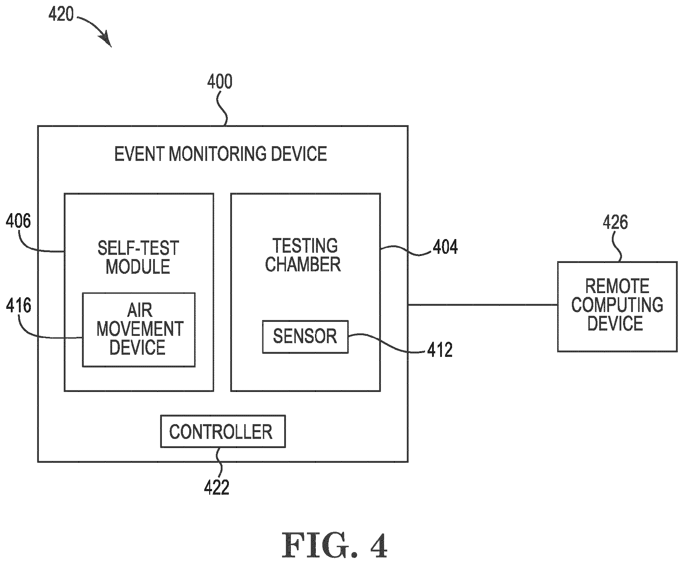

Figure 4 illustrates a system 410 for event detection device testing in accordance with one or more embodiments of the present disclosure. The system 410 can include an event detection device 400 and a remote computing device 426.

As mentioned above, an event detection device 400 can perform an anti-mask test as part of a self-test procedure. The self-test procedure can be a test to ensure the event detection device 400 accurately detects events occurring in the area in which the event detection device 400 is located. As one example, the self-test procedure can allow for the event detection device 400 to detect smoke particulates in the area the event detection device 400 is located in order to detect a fire. As part of the self-test procedure, the event detection device 400 can determine whether the testing chamber 404 of the event detection device 400 is blocked utilizing anti-mask testing procedures during normal operation of the event detection device 400, as are further described herein.

As illustrated in Figure 4, the event detection device 400 can include a self-test module 406, a testing chamber 404, and a controller 422. The self-test module 406 can include an air movement device 416 and the testing chamber 404 can include a sensor 412. The sensor 412 can be, for example, a heat sensor, a smoke sensor, and/or any other kind of sensor or combination thereof.

As mentioned above, the testing chamber 404 can be an optical scatter chamber. The optical scatter chamber can include a light transmitter (e.g., at least one light emitting diode (LED)) and a photosensitive light receiver that can measure a value associated with a test medium located in the testing chamber 404. For example, the testing chamber 404 can pulse the light transmitter to measure whether any matter, such as smoke particles and/or test medium, are present in the testing chamber 404 as is further described herein.

As mentioned above, a controller 422 can cause an event detection device 400 to perform an anti-mask test. The anti-mask test can be performed while the event detection device 400 is simultaneously operating in a normal operation mode. For example, during the normal operational mode of the event detection device 400, the anti-mask test can be performed while the event detection device 400 is also listening for real events (e.g., fire detection). That is, the event detection device 400 does not need to be transitioned from the normal operational mode to a maintenance mode where the event detection device 400 does not listen for events during an anti-mask test. This ensures that the event detection device 400 can still detect any events if they occur while the event detection device 400 is performing an anti-mask test.

As illustrated in Figure 4, the controller 422 is included in the event detection device 400. However, embodiments of the disclosure are not so limited. For example, the controller 422 may be remotely located from the event detection device 400, such as at the remote computing device 426 (e.g., a cloud computing device, a control panel, etc.). Hence, while the anti-mask test procedures described herein can be performed at the event detection device 400 (e.g., by the controller 422), embodiments are not so limited. For instance, in the case of the controller 422 being remotely located from the event detection device 400 such as at a fire control panel, the anti-mask test procedures described herein can be performed at a control panel (e.g., by the controller 422).

Prior to enabling a filter-mode, the controller can cause the event detection device 400 to perform a preliminary event check in the testing chamber 404 to determine whether an event is occurring near the event detection device 400. For example, the event detection device 400 can perform a preliminary event check of smoke in the testing chamber 404 prior to enabling the filter-mode, as is further described herein. The preliminary event check can be utilized prior to performing the anti-mask test to ensure there are no actual events (e.g., a fire event) occurring in the facility prior to the anti-mask test. Additionally, the preliminary event check can ensure the sensor 412 is stable to perform the anti-mask test. For example, the preliminary event check can help evacuate dust from the testing chamber 404 to prevent erroneous results.

In order to perform the preliminary event check, the controller 422 can include causing the air movement device 416 to move air surrounding the event detection device 400 through the testing chamber 404. For example, the air movement device 416 (e.g., a fan) can be initiated causing air movement through the testing chamber 404. During the air movement, the controller 422 can cause the sensor 412 to take a preliminary sample of the air moving through the testing chamber 404 to determine whether there are any particles in the air (e.g., smoke particles) passing through the testing chamber 404 that would indicate an event is occurring. The controller 422 can determine, based on the preliminary sample, whether an event such as a fire is occurring near the event detection device 400.

For example, if the preliminary sample includes particles that exceed an alarm threshold, this indicates that a real event is occurring in the facility. Accordingly, in response to the preliminary sample exceeding a threshold, the controller 422 can determine that the event is occurring and the event detection device 400 can enter an alarm mode and transmit a signal indicating an event (e.g., a fire) is occurring. Since the real event is occurring, the event detection device 400 can wait to perform the anti-mask test. However, if the preliminary sample does not exceed an alarm threshold, the controller 422 can determine no real event is occurring in the facility. Therefore, the event detection device 400 can perform an anti-mask test in response to no event currently occurring in the facility, as is further described herein.

Although the preliminary event test is described above as the sensor 412 detecting smoke particles, embodiments of the disclosure are not so limited. For example, the sensor 412 and/or another sensor included in the event detection device 400 (e.g., not illustrated in Figure 4) may include other detection capabilities, such as heat and/or gas detection capabilities, and in response to detecting heat and/or gas (or other indications of an event), the controller 422 can determine that a real event is occurring and the event detection device 400 can enter an alarm mode and transmit a signal indicating an event is occurring.

In response to the sensor 412 not detecting an event during the preliminary event check (e.g., indicating no real events are occurring in the facility), the controller 422 can receive a signal and initiate the anti-mask test process. The signal can be received from, for example, a control panel of the event detection system, a remote computing device 426, a mobile device, etc. Therefore, in response to the preliminary event check indicating no event is occurring, the controller 422 can enable a filter-mode while the event detection device 400 is simultaneously operating in a normal operational mode.

As described above, the normal operational mode of the event detection device 400 is a mode in which the event detection device 400 is sensing for real events occurring in the facility. While the event detection device 400 is in the filter-mode, the event detection device 400 can simultaneously be in the normal operational mode. The filter-mode can be, for example, a sub-operational mode of the normal operational mode of the event detection device 400.

While in the filter-mode, the controller 422 can enable a software filter to prevent the controller 422 from generating an alarm condition in response to the sensor 412 detecting test medium in the testing chamber 404. The software filter can prevent, in response to detecting a predetermined signal characteristic of an obscuration test value, the event detection device 400 from transmitting an alarm signal, as is further described herein.

The software filter can include computer readable instructions that direct the controller 422 not to transmit an alarm signal when the sensor 412 detects a test medium (e.g., as is further described herein) in the testing chamber 404. For example, while in the filter-mode, in response to causing test medium to be generated, the controller 422 can prevent, for a predetermined amount of time, an alarm condition from being generated in response to the sensor 412 detecting test medium in the testing chamber 404 that does not exceed a threshold amount. In such a way, the event detection device 400 can operate in a filter-mode while simultaneously operating in the normal operational mode sensing for real events while performing an anti-mask test, as is further described herein.

In order to perform the anti-mask test, the controller 422 can cause the self-test module 406 to generate an amount of test medium for the testing chamber 404. In some examples, the test medium can be an aerosol. For example, the controller 422 can cause a coil to heat wax until a temperature at which the wax emits an aerosol comprised of smoke particles. The coil and the wax can be located in a self-test module 406 of the event detection device 400.

The controller 422 can cause the air movement device 416 to pass the generated test medium through the testing chamber 404. For example, the air movement device 416 can move the generated test medium into the testing chamber 404 for detection by the sensor 412, and then cause the air movement device 416 to evacuate the test medium from the test chamber. Based on the air movement device 416 evacuating the test medium from the testing chamber 404, the controller 422 can determine whether the testing chamber 404 is blocked, as is further described herein.

The controller 422 can cause the event detection device 400 to perform the anti-mask test using the generated test medium to determine whether the testing chamber 404 is blocked while the event detection device 400 is in the filter-mode. To perform the anti-mask test, an obscuration test can be utilized.

The obscuration test can include causing, by the controller 422, the sensor 412 to take an initial value (e.g., a clean air value) prior to the test medium being generated and moved into the testing chamber 404 to verify a clean air status for the sensor 412. The initial value can be a reference value for the anti-mask obscuration test, as is further described herein. For instance, the initial value can be 0 percent obscuration per meter (%OPM). In response to the initial value indicating a clean air status (e.g., the initial value is less than a predetermined threshold obscuration level, such as 0.5 %OPM), the controller 412 can generate the test medium as described above and cause the sensor to take obscuration test values, as is further described herein.

After the test medium is generated and the air movement device 416 causes the test medium to move into the testing chamber 404, the sensor 412 can cause the sensor 412 to take a number of obscuration test values. For instance, at a first time the sensor 412 can take a first obscuration test value of 15 %OPM, at a second time the sensor 412 can take a second obscuration test value of 8 %OPM, at a third time the sensor 412 can take a third obscuration test value of 1 %OPM, etc.

The controller 422 can determine that, at the third time, the third obscuration test value of 1 %OPM is within a threshold amount from the initial value (e.g., 0 %OPM). For example, the threshold amount can be 2 %OPM, and as the third obscuration test value of 1 %OPM is within the threshold amount from the initial value, the controller 422 can determine that the third obscuration test value is within the threshold.

As the sensor 412 is taking obscuration test values, the software filter described above can prevent the controller 422 from transmitting an alarm signal. For example, the software filter can filter a signal from the sensor 412, resulting in a filtered signal that does not exceed an alarm threshold of the event detection device 400. The software filter therefore can prevent the controller 422 from transmitting an alarm signal.

The obscuration test can include determining an amount of time taken to evacuate the test medium from the testing chamber 404. If a large amount of time is taken to evacuate the test medium from the testing chamber 404, this may indicate the testing chamber 404 is blocked, whereas if a small amount of time is taken to evacuate the test medium from the testing chamber 404, this may indicate the testing chamber 404 is not blocked, as is further described herein.

Accordingly, the controller 422 can determine an amount of time elapsed between the initial value of 0 %OPM and the obscuration test value that was within the threshold amount of the initial value (e.g., the third obscuration test value). For example, the controller 422 can determine that the amount of time elapsed between the initial value of 0 %OPM and the third obscuration test value of 1 %OPM was 20 seconds.

The controller 422 can compare the amount of time elapsed between the initial value and the obscuration test value that was within the threshold amount of the initial value to a threshold time. In one example, the threshold time can be 25 seconds. The controller can compare the amount of time elapsed (e.g., 20 seconds) to the threshold time (e.g., 25 seconds) and determine that the test medium evacuated the testing chamber 404 within the threshold time limit. Accordingly, the controller 422 can determine, in response to the amount of time being less than the threshold, the testing chamber 404 is not blocked.

However, in a second example, the threshold time can be 15 seconds. The controller can compare the amount of time elapsed (e.g., 20 seconds) to the threshold time (e.g., 15 seconds) and determine that the test medium was not evacuated from the testing chamber 404 within the threshold time limit. Accordingly, the controller 422 can determine, in response to the amount of time being greater than the threshold, the testing chamber 404 is blocked.

As mentioned above, if the testing chamber 404 is blocked, the event detection device 400 may not function properly and may not detect real events in the facility. Accordingly, the controller 422 can generate and transmit, in response to determining the testing chamber 404 is blocked, a notification. The notification can be transmitted to the remote computing device 426, to a fire control panel, to a mobile device of a user, etc.

Additionally, remedial procedures can be performed in response to determining the testing chamber 404 is blocked. In response to the event detection device 400 failing the anti-mask test (e.g., determining the testing chamber 404 is blocked), the controller 422 can transition the event detection device 400 from the normal operational mode to a disabled mode. In the disabled mode, the event detection device 400 does not listen for real events in the facility. In some examples, the notification generated can serve to notify a user that the event detection device 400 should undergo servicing to unblock the testing chamber 404. In some examples, the event detection device 400 can be re-tested to determine whether the first anti-mask test produced a false positive result.

Accordingly, the controller 422 can receive, while the event detection device 400 is in the disabled mode, a command to perform a second anti-mask test. The command can be received from, for instance, the remote computing device 426, a fire control panel, a mobile device, etc.

In response to receiving the command, the controller 422 can transition the event detection device 400 from the disabled mode to a normal operational mode, and can then enable the filter-mode. Additionally, the controller 422 can cause the air movement device 416 to purge the testing chamber 404. Purging the testing chamber 404 can include causing the air movement device 416 to generate air movement through the testing chamber 404 for a predetermined period of time. The controller 422 can then cause the event detection device 400 to perform a second anti-mask test according to the procedure described above to verify whether the testing chamber 404 is blocked, or whether the first anti-mask test produced a false positive result (e.g., and the testing chamber 404 is not actually blocked).

The above anti-masking testing procedure can be performed according to a particular frequency. For example, the anti-masking testing procedure can be performed every 5 minutes, every 20 minutes, every hour, etc.

Additionally, in some examples, the anti-mask testing procedure can be performed in response to an input. For example, in response to a user input (e.g., to the remote computing device 426, to a mobile device not illustrated in Figure 4, to a control panel, etc.), the anti-mask testing can be performed. Such an approach can allow for "on-demand" testing of the event detection device 400.

During a normal operational mode of the event detection device 400, the event detection device 400 can be sampling air in the environment surrounding the event detection device 400 for real events. The anti-masking testing procedures described above can be performed while the event detection device 400 is in the normal operational mode (e.g., not a self-test or maintenance mode).

Performing the anti-mask test while the event detection device 400 is in the filter-mode can allow for the anti-mask test to be completed while the event detection device 400 is in a normal operational mode, as the anti-mask test can be performed without causing the event detection device 400 to falsely detect a real event. However, as the anti-mask testing procedure is being performed, the event detection device 400 can detect a real event. For example, during the anti-mask test, smoke generated from a real fire in the facility (e.g., a non-test medium event) can enter the testing chamber 404 that exceeds the alarm threshold for the event detection device 400 while the anti-mask testing procedure is being performed. The sensor 412 can detect the smoke generated from the real fire (e.g., separate from the test medium), even during the anti-mask test. In response to the event being detected during the anti-mask test, the controller 422 can cause the event detection device 400 to enter an alarm condition even while the event detection device 400 is in the filter-mode.

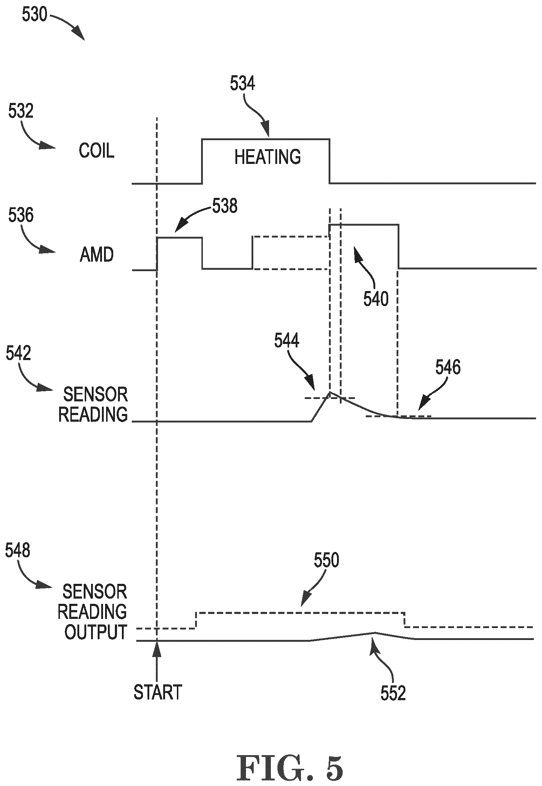

Figure 5 illustrates a timing diagram 530 for event detection device testing in accordance with one or more embodiments of the present disclosure. The steps of the timing diagram 530 can be performed by, for example, an event detection device such as event detection device 400, previously described in connection with Figure 4.

In order to perform the anti-mask test, an amount of test medium can be generated for the testing chamber. As indicated at 534, a coil included in the self-test module of the event detection device can heat wax to generate an aerosol.

Prior to beginning the anti-mask test, a preliminary event check can be performed to ensure that no events are currently occurring during the anti-mask test. Accordingly, as indicated at 536, the air movement device can, at 538, move air surrounding the event detection device through the testing chamber. A preliminary sample of the air moving through the test chamber can be taken. Using the preliminary sample, the controller can determine whether an event is occurring. As indicated in the timing diagram, the preliminary sample at 538 can be taken prior to the coil heating the wax at 534.

Additionally, at 540 the air movement device can be pulsed to pass the generated test medium through the testing chamber of the event detection device. For example, the air movement device can cause the generated test medium to flow through the testing chamber so the sensor can take samples of the air including the generated test medium as it flows through the testing chamber, as is further described herein.

The sensor can take a number of obscuration test values of the air including the generated test medium in the testing chamber as indicated at 542. For example, at 544, the sensor can take an obscuration test value as the air movement device is causing the air including the generated test medium to pass through the testing chamber. Additionally, at 546, the sensor can take another obscuration test value. The obscuration test value at 546 can be an obscuration test value that is within the threshold value of an initial value, as previously described in connection with Figure 4. At this point, a controller can determine an amount of time to evacuate the test medium from the testing chamber, indicated by the amount of time elapsed between the obscuration test value at 544 and the obscuration test value at 546.

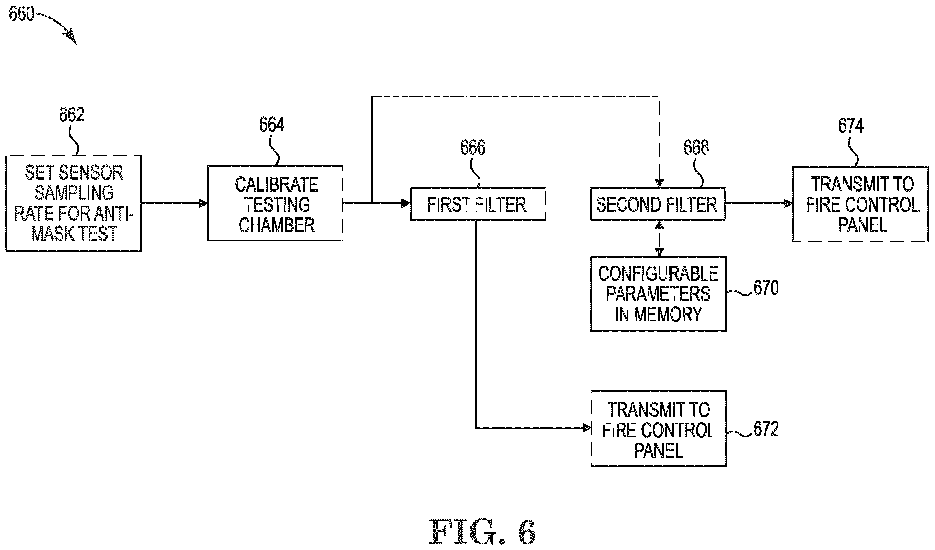

As indicated in the timing diagram 530 at 548, the output of the sensor reading can be filtered to prevent an alarm signal from being transmitted to the fire control panel. For example, the filtering can be enabled at 550 for the duration of the anti-mask test. As indicated at 552, the filtered sensor reading output can be below an alarm threshold for the event detection device, preventing an alarm signal from being transmitted to the fire control panel during the anti-mask test. The software filter is further described in connection with Figure 6.

Figure 6 illustrates a method 660 for a software filter for event detection device testing in accordance with one or more embodiments of the present disclosure. The method 660 can be performed by, for example, an event detection device such as event detection device 400, previously described in connection with Figure 4.

The method 660 can be performed as the software filter so as to prevent the event detection device from transmitting an alarm signal. At 662, the method 660 includes setting a sensor sampling rate for the anti-mask test. For example, the sensor sampling rate can be set to a higher sampling rate for the anti-mask test as compared to a normal operational sampling rate when the filter-mode of the event detection device is not enabled. The sampling rate can be set to, for example, 320 milliseconds.

At 664, the method 660 can include calibrating the testing chamber. For example, a testing chamber offset can be removed and a calibration factor applied to the sensor.

At 666, a first filter can be applied to a signal from the sensor. The filter can be, for example, an averaging filter that can be configurable. The averaging filter can be a recursive averaging filter that, when applied to the output signal from the sensor, prevents the output signal from the sensor from exceeding a response threshold, preventing the event detection device from generating and transmitting an alarm signal during the anti-mask test. At 672, the method 660 can include transmitting the filtered signal to a fire control panel on a first output channel. The averaging filter can be utilized so that a sensor response and event detection device status can be sent to the fire control panel on the first output channel.

At 668, the method 660 can include applying a second filter to the signal from the sensor. The second filter can be configurable and the configurable filter parameters can be saved at 670 in memory local to the event detection device and/or remotely from the event detection device. At 674, the signal after being filtered by the second filter can be transmitted to the fire control panel on a second output channel, where the signal after being filtered by the second filter can also be lower than a response threshold, preventing the event detection device from generating and transmitting an alarm signal during the anti-mask test.

Accordingly, event detection device testing according to the disclosure can allow for the event detection device to perform anti-mask testing while the event detection device is simultaneously operating in a normal operational mode detecting for real events. The anti-mask testing can ensure that the testing chamber of the event detection device is not blocked while the event detection device 400 is able to simultaneously listen for real events. Event detection device testing can provide for a more effective, robust, and cost-conscious solution for anti-mask testing and event detection device operation, as compared with previous approaches.

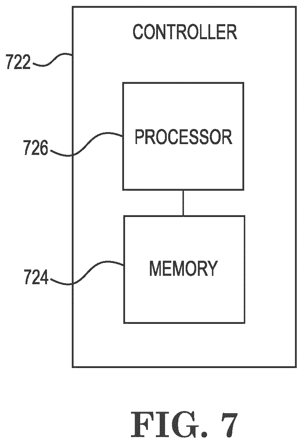

Figure 7 is an example of a controller 722 for event detection device testing, in accordance with one or more embodiments of the present disclosure. As illustrated in Figure 7, the controller 722 can include a memory 724 and a processor 726 for event detection device testing, in accordance with the present disclosure.

The memory 724 can be any type of storage medium that can be accessed by the processor 726 to perform various examples of the present disclosure. For example, the memory 724 can be a non-transitory computer readable medium having computer readable instructions (e.g., executable instructions/computer program instructions) stored thereon that are executable by the processor 726 for event detection device testing in accordance with the present disclosure.

The memory 724 can be volatile or nonvolatile memory. The memory 724 can also be removable (e.g., portable) memory, or non-removable (e.g., internal) memory. For example, the memory 724 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 724 is illustrated as being located within controller 722, embodiments of the present disclosure are not so limited. For example, memory 724 can also be located internal to another computing resource (e.g., enabling computer readable instructions to be downloaded over the Internet or another wired or wireless connection).

The processor 726 may be a central processing unit (CPU), a semiconductor-based microprocessor, and/or other hardware devices suitable for retrieval and execution of machine-readable instructions stored in the memory 724.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A controller (122, 422, 722) for testing an event detection device (100, 200, 300, 400), comprising:
a memory (124, 724); and
a processor (126, 726) configured to execute executable instructions stored in the memory (124, 724) to:
enable a filter-mode while the event detection device (100, 200, 300, 400) is simultaneously operating in a normal operational mode;
cause a self-test module (106, 406) of the event detection device (100, 200, 300, 400) to generate an amount of test medium for a testing chamber (104, 204, 404) of the event detection device (100, 200, 300, 400);
cause an air movement device (116, 216, 416) of the event detection device (100, 200, 300, 400) to pass the test medium through the testing chamber (104, 204, 404); and
cause the event detection device (100, 200, 300, 400) to perform an anti-mask test using the test medium to determine whether the testing chamber (104, 204, 404) is blocked while in the filter-mode.

2. The controller of claim 1, wherein the processor is configured to enable the filter-mode in response to a preliminary event check indicating no event is occurring.

3. The controller of claim 1, wherein the processor is configured to cause the event detection device to enter an alarm condition in response to a non-test medium event being detected during the anti-mask test.

4. The controller of claim 1, wherein the processor is configured to cause the air movement device to evacuate the generated amount of test medium from the testing chamber.

5. The controller of claim 1, wherein the anti-mask test includes an obscuration test.

6. The controller of claim 5, wherein the processor is configured to perform the obscuration test by:
causing, prior to generating the test medium, a sensor (412) to take an initial value to verify a clean air status for the sensor (412);
causing, after the test medium is generated, the sensor (412) to take a number of obscuration test values until one of the number of obscuration test values is within a threshold amount of the initial value; and
determining an amount of time elapsed between the initial value and the one of the number of obscuration test values that is within the threshold amount of the initial value.

7. The controller of claim 6, wherein the processor is further configured to perform the obscuration test by determining, in response to the amount of time being less than a threshold, the testing chamber is not blocked.

8. The controller of claim 6, wherein the processor is further configured to perform the obscuration test by determining, in response to the amount of time being greater than a threshold, the testing chamber is blocked.

9. The controller of claim 8, wherein the processor is configured to generate and transmit, in response to determining the testing chamber is blocked, a notification.

10. A method for testing an event detection device (100, 200, 300, 400), comprising:
performing, by a controller (122, 422, 722), a preliminary event check via a testing chamber (104, 204, 404) of the event detection device (100, 200, 300, 400);
enabling, by a controller (122, 422, 722) based on the preliminary event check, a filter-mode of the event detection device (100, 200, 300, 400) while the event detection device (100, 200, 300, 400) is simultaneously operating in a normal operational mode;
causing, by the controller (122, 422, 722), a self-test module (106, 406) of the event detection device (100, 200, 300, 400)to generate an amount of test medium for the testing chamber (104, 204, 404) of the event detection device (100, 200, 300, 400);
causing, by an air movement device (116, 216, 416) of the event detection device (100, 200, 300, 400), the test medium to pass through the testing chamber (104, 204, 404); and
causing, by the controller (122, 422, 722), the event detection device (100, 200, 300, 400) to perform an anti-mask test using the test medium to determine whether the testing chamber (104, 204, 404) is blocked while in the filter-mode, wherein the anti-mask test is an obscuration test.

11. The method of claim 10, wherein enabling the filter-mode includes enabling a software filter to prevent the controller from generating an alarm condition in response to a sensor (412) of the event detection device detecting the test medium in the testing chamber.

12. The method of claim 11, wherein:
the obscuration test includes taking, by the sensor, an obscuration test value having an associated signal including a predetermined signal characteristic; and
the software filter is configured to prevent, in response to detecting the predetermined signal characteristic, the event detection device from transmitting an alarm signal.

13. The method of claim 10, wherein the method includes causing, by the controller in response to a sensor of the event detection device detecting smoke separate from the test medium during the anti-mask test, the event detection device to enter an alarm condition while the event detection device is in the filter-mode.

14. The method of claim 10, wherein the method includes causing, by the controller in response to the preliminary event check indicating an event is occurring, the event detection device to enter an alarm condition.

15. The method of claim 10, wherein:
the preliminary event check includes:
causing, by the air movement device, air surrounding the event detection device to move through the testing chamber; and
taking, by the sensor, a preliminary sample of the air moving through the testing chamber to determine whether an event is occurring; and
the method includes enabling, by the controller in response to the preliminary event check indicating no event is occurring, the filter-mode and causing the self-test module to generate the test medium.
